**Europäisches Patentamt**

**European Patent Office**

**Office européen des brevets**

(19)

(11) Veröffentlichungsnummer : **0 402 728 B1**

(12) # EUROPÄISCHE PATENTSCHRIFT

(45) Veröffentlichungstag der Patentschrift :
**29.12.93 Patentblatt 93/52**

(51) Int. Cl.$^5$ : **C08G 18/10,** C08G 18/66,
C08G 18/78, C08G 18/79,
C09J 175/04

(21) Anmeldenummer : **90110544.5**

(22) Anmeldetag : **02.06.90**

(54) Einkomponenten-Reaktivklebstoffe auf Polyurethanbasis.

(30) Priorität : **16.06.89 DE 3919697**

(43) Veröffentlichungstag der Anmeldung :
**19.12.90 Patentblatt 90/51**

(45) Bekanntmachung des Hinweises auf die
Patenterteilung :
**29.12.93 Patentblatt 93/52**

(84) Benannte Vertragsstaaten :
**AT BE CH DE ES FR GB IT LI NL SE**

(56) Entgegenhaltungen :
**EP-A- 0 068 209
EP-A- 0 100 508
EP-A- 0 131 902
EP-A- 0 153 579
DE-C- 3 708 890
CHEMICAL ABSTRACTS, vol. 106, no. 18, Mai
1987 Columbus, Ohio, USA Degtyareva et al.:
"Adhesive strength and water resistance of
Polyurethane Adhesives" Seite 32; Spalte 1;
ref. no. 139199X**

(73) Patentinhaber : **BAYER AG
D-51368 Leverkusen (DE)**

(72) Erfinder : **Hess, Heinrich, Dr.
Auf der Schildwache 13a
D-5000 Köln 80 (DE)**
Erfinder : **Kopp, Richard, Dr.
Bilharzstrasse 15
D-5000 Köln 80 (DE)**
Erfinder : **Grögler, Gerhard, Dr.
von-Diergardt-Strasse 48
D-5090 Leverkusen 1 (DE)**
Erfinder : **Stepanski, Horst, Dr.
Raushofstrasse 20
D-5090 Leverkusen 3 (DE)**
Erfinder : **Arend, Günter, Dr.
Claudiusstrasse 42
D-4047 Dormagen (DE)**
Erfinder : **Tups, Hans, Dr.
Don-Bosco-Strasse 16
D-5060 Bergisch-Gladbach 2 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Polyurethanreaktivmassen und ihre Verwendung als Eintopfklebstoffsysteme.

Heißhärtbare Einkomponenten-Reaktivklebstoffe auf der Basis von durch Polyaddukt-Umhüllung stabilisierten, festen, feinverteilten Polyisocyanaten und mit Isocyanaten reaktionsfähigen Verbindungen wie Polyolen und Polyaminen sind in der Patentliteratur hinreichend bekannt (siehe z.B. EP-A-62 780, 100 508 und 153 579 und DE-A-31 12 054, 32 28 723 und 34 03 499).

Ein starkes Interesse besteht in der Verklebung von KFZ-Karosserieteilen aus z.B. glasfaserverstärktem Polyesterharz (SMC). Bisher übliche, durch Wärmezufuhr die endgültige Festigkeit erreichende Klebstoffe sind keine echten Einkomponentenklebstoffe, sondern Zweikomponentenklebstoffe mit sehr langer Topfzeit oder über mehr als eine Stufe abreagierende Mischungen.

Beim Verkleben von SMC-Teilen wird die Wärme üblicherweise durch Heizbacken aus Metall, die der Kontur der zu fertigenden Teile angepaßt und die von aufgeheiztem Thermoöl durchströmt sind, auf die Fügeteile und damit auch in die Klebstoffschicht übertragen. Das Aufheizen im Heizbackenprozeß erfolgt wesentlich rascher als beim Aufheizen im Umluft-Heizschrank, bei dem nicht Metall, sondern Luft als wärmeübertragendes Medium dient. Somit sind kurze Cycluszeiten möglich. Bisher übliche Zweikomponenten-Klebstoffe, bei denen zumindest das Polyisocyanat als kontinuierliche Phase enthalten ist, reagieren nach dem ersten Wärmestoß und Wegfall der Wärmezufuhr auch bei Raumtemperatur langsam von selbst bis zur Endfestigkeit weiter.

Durch Hitze härtbare Einkomponenten-Klebstoffe der beschriebenen Art auf Basis von pulverförmigen festen Polyisocyanaten bedürfen zum Abreagieren der ständigen Wärmezufuhr von außen. Ein bisher ungelöstes Problem bei der Verklebung von SMC-Fügeteilen mit der Heizbackentechnik bestand daher darin, den Einkomponenten-Klebstoff in der ersten Verfestigungsstufe (z.B. 2 min bei 120°C) soweit abbinden zu lassen, daß gute Handhabbarkeit erreicht wird (Handfestigkeit > 1N/mm$^2$ ), und die Verklebung im Verlauf der thermischen Nachbehandlung (Lackierofen) ihre Endfestigkeit erreicht.

Sehr entscheidend für den Aufbau von Kohäsion (Festigkeit infolge Hochmolekularaufbaus) und Adhäsion (physikalische und chemische Wechselwirkungen der Klebstoff-Grenzschicht mit der Fügeteil-Oberfläche) ist offenbar die Geschwindigkeit, mit der die Klebstoffmasse auf die Abbindetemperatur gebracht wird.

Im Umluft-Ofen wird die Wärme relativ langsam zugeführt. Die Temperatur im Klebefilm steigt daher ebenfalls relativ langsam an und die Reaktionspartner haben genügend Zeit, durch Diffusion und chemische Reaktion zu einem hochmolekularen Stoff mit gleichzeitig guter Adhäsion zur Fügeteil-Oberfläche, also zu einem echten Kleb-Stoff abzureagieren.

Beim Heizbackenprozeß erfolgt das Aufheizen so rasch, daß der Klebstoff zwar verfestigt, jedoch keine Adhäsion zur Fügeteiloberfläche entwickeln kann. Auch eine nachgeschaltete Wärmebehandlung kann in solchen Fällen keine Adhäsion, wie sie für einen Klebstoff erforderlich ist, mehr bewirken.

Aufgabe der vorliegenden Erfindung war es, verbesserte Klebstoffe, insbesondere für schnelle Aufheizsysteme bereitzustellen.

Gegenstand der Erfindung sind Polyurethanreaktivmassen, enthaltend wenigstens ein Polyisocyanat und wenigstens ein Polyol B, dadurch gekennzeichnet, daß enthalten sind

A) ein über 40°C schmelzendes Polyisocyanat

B) ein Polyolgemisch, erhältlich aus den Polyolen B1, 92 und B3, die jeweils wenigstens drei Hydroxylgruppen aufweisen, wobei

B1 ein Molekulargewicht von 800 bis 6.000,

B2 ein Molekulargewicht von 400 bis 799 und

B3 ein Molekulargewicht von 92 bis 399 aufweist und

C) ein Polyamin.

Das Molekulargewicht ist definiert als Zahlenmittelwert aller im betreffenden Polyol vorkommenden Molmassen. Der Zahlenmittelwert $M_n$ (im Gegensatz zum Gewichtsmittelwert) der Molmasse ist definiert als

$$M_n = \frac{\sum\limits_i n_i \cdot M_i}{\sum n_i} ,$$

das ist die Anzahl n der Moleküle i mit der Molmasse M, dividiert durch die Gesamtzahl aller Moleküle.

Auf 1 Mol der Komponente B2 kommen vorzugsweise:

Komponente B1: 0,03-3 Mol, insbesondere 0,1-1,0 Mol,

Komponente B3: 0,03-5 Mol, insbesondere 0,1-2 Mol.

Die Polyisocyanate A haben einen Schmelzpunkt über 40°C, vorzugsweise über 80°C, auswählbar aus der Rähe 1,5-Naphthalindiisocyanat, dimeres 4,4′-Diisocyanatodiphenylmethan, dimeres 2,4-Diisocyanatotoluol, 3,3′-Diisocyanato-4,4′-dimethyl-N,N′-diphenylharnstoff und N,N′-Bis-[4-(4- oder 2-isocyanatophenylmethyl)-phenyl]-harnstoff. Besonders bevorzugt ist dimeres 2,4-Diisocyanatotoluol.

Die Polyisocyanate werden vorzugsweise durch Einwirkung von beispielsweise aliphatischen Polyaminen mit Molekulargewichten von 32 bis 399 und gegebenenfalls durch Einwirkung von aliphatischen Polyaminen mit Molekulargewichten von 400 bis 8000 stabilisiert. Als Beispiele für derartige Polyamine seien genannt: Ethylendiamin, 1-Amino-3,3,5-trimethyl-5-aminomethyl-cyclohexan, 3,3′-Dimethyl-4,4′-diaminodicyclohexylmethan, Diethylentriamin, Methylnonandiamin.

Als Stabilisatoren kommen z.B. ferner in Frage: Hydrazin, zumeist in Form von Hydrazinhydrat, $C_1$-$C_6$-alkylsubstituierte Hydrazine, z.B. Methylhydrazin, Ethylhydrazin, Hydroxyethyl-hydrazin oder N,N′-Dimethylhydrazin, Verbindungen mit Hydrazid-Endgruppen wie z.B. Carbodihydrazid, Ethylen-bis-carbazinester, β-Semicarbazido-propionsäurehydrazid oder Isophoron-bis-semicarbazid. Weitere Desaktivierungsmittel sind in DE-A-3 230 757 und 3 112 054 sowie EP-A-103 325 und 62 780 aufgezählt.

Als Stabilisatoren für die Isocyanatkomponente können auch offenkettige, mono- oder bicyclische Amidine bzw. Guanidine, welche keine gegenüber Isocyanaten reaktiven Wasserstoffatome aufweisen, verwendet werden. Als Beispiele für derartige Verbindungen seien genannt: Tetramethylguanidin, Pentamethylguanidin, 1,2-Dimethyl-tetrahydropyrimidin, 1,8-Diaza-bicyclo[5,4,0]-undec-7-en, 1,5-Diaza-bicyclo[4,3,0]non-5-en. Weitere Beispiele für derartige Amidine sind in der DE-A-3 403 500 aufgeführt.

Als NCO-reaktives Suspendiermittel für die festen, stabilisierten Polyisocyanate werden z.B. flüssige oder niedrigschmelzende (<80°C, bevorzugt <60°C) nieder- und/oder höhermolekulare Polyole und/oder Polyamine verwendet.

Bevorzugte Polyole B1 bis B3 sind Polyester, Polythioether, Polyacetale, Polycarbonate, Polyesteramide und insbesondere Glykole und Polyether. Beispiele hierfür sind z.B. in der DE-A-2 920 501, DE-A-2 854 384 und der DE-A-3 230 757 aufgeführt.

Es können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind (gefüllte Polyole)

Polyaddukthaltige Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in o.g., Hydroxylgruppen aufweisenden Verbindungen, ablaufen läßt.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet. Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44 und 54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, und in der DE-2 854 384 und 2 920 501 beschrieben.

Geeignete Polyole sind auch hydroxylgruppenhaltige Polymerisate, beispielsweise Copolymerisate aus olefinisch ungesättigten Monomeren und olefinisch ungesättigten Monomeren mit aktivem Wasserstoff. Sie werden beispielsweise in der EP-A 62 780, Seite 5 und deren Beispielen beschrieben. Sie finden vorzugsweise Anwendung für Dichtungs-, Füll-, Kleb- oder Unterbodenschutzmassen.

Es können innerhalb jedes der drei genannten Molekulargewichtsbereiche Mischungen der obengenannten Verbindungen mit mindestens zwei gegenüber Isocyanaten reaktionsfähigen Wasserstoffatomen, z.B. Mischungen von Polyethern und Polyestern, eingesetzt werden.

Als in den Suspensionen gegebenenfalls enthaltene Polyole B3 kommen auch niedermolekulare Kettenverlängerer oder Vernetzer in Frage. Bei diesen Kettenverlängerern oder Vernetzern handelt es sich insbesondere um mindestens dreifunktionelle Verbindungen, welche an aliphatische und/oder cycloaliphatische Gruppen gebundene Hydroxylgruppen und Molekulargewichte zwischen 92 und 399 aufweisen. Bevorzugt sind dabei niedermolekulare Triole mit an aliphatische oder cycloaliphatische Gruppen gebundenen Hydroxylgruppen des Molekulargewichtsbereichs 92 bis 399.

Diese Verbindungen weisen in der Regel 3 bis 8, vorzugsweise 3 bis 4, besonders bevorzugt jedoch 3, Hydroxylgruppen auf. Es können auch Mischungen von verschiedenen Verbindungen verwendet werden, insbesondere das Trimethylolpropan, Trimethylolethan, Hexantriol-1,2,6, Glycerin, Pentaerythrit, Chinit, Mannit, Sorbit, Rizinusöl sowie Formose oder Formit.

Ferner sind geeignet tertiäraminhaltige Polyole, z.B. Triethanolamin.

Auch bereits Urethan- oder Harnstoffgruppen enthaltende Polyhydroxylverbindungen sowie gegebenenfalls modifizierte, natürliche Polyole, wie Rizinusöl, Kohlenhydrate oder Stärke, sind verwendbar. Auch Anlagerungsprodukte von Alkylenoxiden an Phenol-Formaldehyd-Harze bzw. an Harnstoff-Formaldehydharze können im erfindungsgemäßen Verfahren eingesetzt werden. In einer besonders bevorzugten Ausführungsform besteht das Polyolgemisch B1 bis B3 wenigstens zum Teil aus durch Umsetzung mit wenigstens einem Isocyanat erhältlichen hydroxylgruppenhaltigen Prepolymeren. Es können aber auch nicht vorverlängerte Gemische eingesetzt werden.

Zur Herstellung der hydroxylgruppenhaltigen Prepolymeren werden die obengenannten nieder- und höhermolekularen Polyole durch Vorreaktion mit einem Unterschuß Polyisocyanat modifiziert.

Als Polyisocyanate für die Modifizierung der Polyole B1 bis B3 kommen aliphatische, cycloaliphatische, araliphatische, aromatische und/oder heterocyclische Polyisocyanate in Betracht, wie sie z.B. in der DE-A-2 920 501 (S. 12 bis 16) aufgeführt sind.

Besonders bevorzugt werden in der Regel die technisch leicht zugänglichen Polyisocyanate, z. B. das 2,4- und 2,6-Toluylendiisocyanat sowie beliebige Gemische dieser Isomeren ["TDI"], Polyphenyl-polymethylen-polyisocyanate, wie sie durch Anilin-Formaldehyd-Kondensation und anschließende Phosgenierung hergestellt werden ("rohes MDI"), 4,4'- und/oder 2,4'-Diphenylmethan-diisocyanat, 1,6-Hexamethylendiisocyanat, 1-Isocyanato-3,3,5-trimethyl-5-isocyanatomethyl-cyclohexan (IPDI), Perhydro2,4'-und/oder -4,4'-diphenylmethan-diisocyanat.

Als Polyamin C können flüssige, nieder- und/oder höhermolekulare, aromatische und/oder aliphatische Polyamine, insbesondere mit einem Molekulargewicht von 700 bis 4500, verwendet werden. Bevorzugt werden höhermolekulare aliphatische Polyamine, gegebenenfalls mit untergeordneten Mengen niedermolekularer aliphatischer Polyamine.

In einer bevorzugten Ausführungsform werden höhermolekulare Polyaminoverbindungen mit aliphatischen Aminogruppen mit einem Äquivalentgewichtsbereich von 250 bis 2000, vorzugsweise von 300 bis 750 eingesetzt, wie sie z.B. durch reduktive Aminierung von Polyoxyalkylenglykolen mit Ammoniak nach BE-PS 634741 und US-PS 3 654 370 erhalten werden. Weitere höhermolekulare Polyoxyalkylen-Polyamine können nach Methoden, wie sie in der Firmenschrift "Jeffamine, Polyoxypropylene Amines" von Texaco Chemical Co., 1978, aufgezählt werden, hergestellt werden, beispielsweise durch Hydrierung van cyanethylierten Polyoxypropylenglykolen (DE-A-1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-A-2 546 536. Geeignete höhermolekulare aliphatische Di- und Polyamine sind auch die nach DE-A-29 48 419, DE-A-3 039 600, DE-A-3 112 118, der EP-A-61 627, EP-A-71 132 und EP-A-71 139 durch alkalische Hydrolyse von NCO-Prepolymeren (mit aliphatischen Diisocyanaten) mit Basen über die Carbamatstufe zugänglichen Polyamine.

Es handelt sich bei dem Verfahren nach DE-A-2 948 419 und den anderen zitierten Literaturstellen vorzugsweise um Polyether-Polyamine, aber auch Polyester-, Polyacetal-, Polythioether- oder Polycaprolacton-Polyamine, vorzugsweise 2- oder 3-funktionelle Polyamine, welche Urethangruppen (aus der Reaktion der entsprechenden höhermolekularen Polyhydroxylverbindungen mit den überschüssigen Polyisocyanaten) enthalten und die Aminogruppen an dem Rest des (ehemaligen) Polyisocyanats tragen. Die höhermolekularen Polyamine können jedoch auch nach anderen Verfahren, z.B. durch Umsetzung von NCO-Prepolymeren mit überschüsslgen Mengen an Diaminen entsprechend DE-AS 1 694 152 hergestellt werden; eine andere Synthesemöglichkeit beschreibt die FR-PS 1 415 317 durch Überführung der NCO-Prepolymere mit Ameisensäure in die N-Formylderivate und deren Verseifung.

Diese höhermolekularen, aliphatischen Polyamine können sowohl als Stabilisatoren für die Polyisocyanatkomponente als auch als Suspendiermedium und Reaktivkomponente C dienende Komponente Verwendung finden.

Ganz besonders bevorzugte Polyamine C sind Polyether mit Polyalkylenoxideinheiten, die an aromatische Startmoleküle addiert sind.

Zusätzlich können niedermolekulare Kettenverlängerer D verwendet werden, insbesondere niedermolare aromatische Diamine des Molekulargewichtsbereiches 108 bis 399, die die Aminogruppen auch an heterocyclischen Resten mit aromatischem Charakter gebunden, enthalten können.

Gegebenenfalls können die üblichen Polyurethankatalysatoren, mit besonders gutem Effekt tertiäre Amine oder Metallkatalysatoren, verwendet werden.

Es sind dies z.B. tertiäre Amine, wie Triethylamin, Tributylamin, N,N,N',N'-Tetramethyl-ethylendiamin, 1,4Diaza-bicyclo-(2,2,2)-octan, N,N-Dimethylbenzylamin, N,N-Dimethylcyclohexylamin.

Als organische Metallverbindungen kommen insbesondere organische Zinnverbindungen und Bleiverbindungen als Katalysatoren in Frage. Als organische Zinnverbindungen kommen vorzugsweise Zinn(II)-salze von Carbonsäuren wie Zinn(II)-ethylhexoat und Zinn(II)-stearat und die Dialkylzinnsalze von Carbonsäuren, wie z.B. Dibutylzinndilaurat oder Dioctylzinndiacetat in Betracht. Als organische Bleiverbindungen kommen vorzugsweise Blei(II)-salze von Carbonsäuren wie Blei(II)-naphthenat, Blei(II)-ethylhexoat, Blei(II)-stearat, aber auch z.B. Blei(II)-bis-diethyldithiocarbamat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102, und in der DE-A 3 230 757 beschrieben.

Die Katalysatoren werden in der Regel in einer Menge zwischen etwa 0,001 und 10 Gew-%, bezogen auf die Gesamtzusammensetzung, eingesetzt.

Als gegebenenfalls enthaltene Hilfs- und Zusatzstoffe seien genannt: Farbstoffe oder Pigmente, Füllstoffe wie Schwerspat, Kreide, Quarzmehl, Kieselgur, Silicagel, Fällungskieselsäuren, pyrogene Kieselsäuren, Gips, Talkum, Aktivkohle, Ruß, Metallpulver.

Es können ferner auch Reaktionsverzögerer, z.B. sauer reagierende Stoffe wie Salzsäure, organische Säurehalogenide oder organische Säuren, ferner Flammschutzmittel der an sich bekannten Art, z.B. Trischlorethylphosphat oder Ammoniumphosphat und -polyphosphat, sowie Stabilisatoren gegen Alterungs- und Witterungseinflüsse wie phenolische Antioxidantien und Lichtschutzmittel, Weichmacher und fungistatisch und/oder bakteriostatisch wirkende Substanzen mitverwendet werden.

Beispiele sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in DE-A-2 854 384 und 2 920 501 beschrieben.

Je nach Viskosität und Schmelzverhalten der Ausgangskomponenten und je nach Art und Menge der zugesetzten Füllstoffe erhält man bei Raumtemperatur mehr oder weniger viskose PU-Reaktiv-Klebstoffmischungen. Diese Reaktiv-Klebstoffmischungen sind Suspensionen eines festen, durch Polyadduktumhüllung stabilisierten Polyisocyanats in der Polyol- und Polyamin-Komponente. Die Verfestigung dieser Mischungen erfolgt durch Hitzeeinwirkung, backen. Die Verarbeitung der erfindungsgemäßen Systeme richtet sich nach deren Beschaffenheit und der technischen Aufgabenstellung. Sie können z.B. mit der Hand oder über eine geeignete Auspreß- bzw. Fördereinrichtung, z.B. über eine Kartusche oder eine Rakel auf die zu verklebenden Werkstoffe, z.B. Artikel aus blankem oder vorbeschichtetem Metall, Glas, glasierte Keramik, oder Kunststoffe, die auch z.B. mit Glasfasern verstärkt sein können, aufgebracht werden.

Die Mengenangaben in den Beispielen beziehen sich, sofern nicht anders angegeben, auf Gewichtsteile.

Beispiel 1

Herstellung des OH-Prepolymeren:

Zu einer Mischung aus 60,5 Teilen eines Polyoxypropylenoxyethylenethertriols mit 17,5 %. Ethylenoxid als Endblock, der 0H-Zahl 34 und dem Molekulargewicht 4950, 35 Teilen Polyoxypropylenethertriol der OH-Zahl 370 und dem Molekulargewicht 450, und 4,5 Teilen Trimethylolpropan (OH-Zahl 1254, Molekulargewicht 134) werden in der Wärme (80°C) 0,1 Teil Pb-octoat und unter Rühren langsam 5 Teile Isophorondiisocyanat (Molekulargewicht 222) zugetropft. Man rührt 1 Stunde, zuletzt unter Anlegen von Vakuum, bei 100°C nach und erhält so ein OH-Prepolymer-Gemisch mit einer Viskosität von 8000 mPa.s bei Raumtemperatur (25°C).

Zu 63,36 Teilen des OH-Prepolymer werden 40 Teile eines Polyoxypropylenetherdiamins der NH-Zahl 112, Molekulargewicht 1000, welches aus einem auf 2,2-Bis-(4-Hydroxyphenyl)-propan gestarteten Polyoxypropylenetherdiol durch Druckaminierung mit $NH_3$ gewonnen wurde, sowie weitere 0,2 Teile Pb-octoat, 0,2 Teile einer 33 %igen Lösung von DABCO in Dipropylenglykol, 9 Teile Aerosil R202 (hydrophobierte pyrogene Kieselsäure der Firma DEGUSSA) und 0,10 Teile 4,4′-Diamino-3,3′-dimethyldicyclohexylmethan zugesetzt und zuletzt 54,21 Teile dimeres 2,4-Diisocyanatotoluol einsuspendiert. Man erhält eine bis 50°C lagerstabile thixotrope Suspension mit einer Viskosität von ca. 70.000 mPa.s bei Raumtemperatur. Aufdicktemperatur: 84°C. Härte nach Verfestigung bei 120°C: 60 Shore D.

Prüfung der Klebeeigenschaften

Als Prüfmaterial dienen Fügeteile aus einem mit 30 % Glasfasern verstärktem Polyesterharz der Abmessung 20 mm x 40 mm x 4 mm (SMC).

Als weitere Prüfmaterialien wurden neben dem glasfaserverstärktem Polyester auch Makrolon (Poly-Hexandiolcarbonat) und Duranglas verwendet. Nach Auftrag des Klebstoffs werden zwei Fügeteilstreifen so zusammengelegt, daß eine überlappte Fläche von 10 x 20 mm und eine Klebefilmstärke von ca. 0,2 mm entsteht. Die Probekörper werden unter den unten angegebenen Bedingungen durch Hitzeeinwirkung miteinander fest verbunden (verklebt).

Nach einstündiger Lagerung der Prüfkörper bei Raumtemperatur wird die Scherfestigkeit nach DIN 53 283 mit einem Spindelvorschub von 100 mm pro Minute ermittelt.

Die Ergebnisse sind in folgender Tabelle dargestellt.

| Fügeteile | Aushärtebedingungen | Zugscherfestigkeit in $N/mm^2$ | Prüftemperatur |
|---|---|---|---|
| SMC/SMC | 2 min 120° C Heizbacken | 1,6 | Raumtemperatur |
| SMC/SMC | 2 min 120° C Heizbacken + 30 min 140° C | 8,3 | Raumtemperatur |
| Makrolon/Makrolon | 5 min 120° C im Umluft-schrank, Fixierung mit Briefklammer | 4,8 | Raumtemperatur |
| Makrolon/Makrolon | 15 min 120° C, " | 10,2 | Raumtemperatur |
| Makrolon/Makrolon | 15 min 120° C, " | 5,7 | 85° C |
| Duranglas-Makrolon | 15 min 120° C, " | 4,4 | Raumtemperatur |

EP 0 402 728 B1

Beispiel 2 (Vergleichsbeispiel)

Gemäß Beispiel 1 der EP-A-153 579 wurde eine heißhärtbare Eintopf-Klebstoff-Mischung hergestellt und diese auf ihre Verwendbarkeit zur Verklebung von SMC-Teilen im Heizbackenprozeß geprüft. Die Prüfung erfolgte genau analog der Prüfung in Beispiel 1 dieser Anmeldung.

In der folgenden Übersicht wurden die Prüfergebnisse aus dem Vergleichsbeispiel 2 direkt den entsprechenden Ergebnissen aus Beispiel 1 dieser Anmeldung gegenübergestellt.

| | Zugscherfestigkeit [N/mm$^2$] bei Raumtemperatur | Aushärtebedingungen |
|---|---|---|
| Beispiel 1 dieser Anmeldung | 8,3; Werkstoffversagen | 2 min 120°C, Heizbacken + 30 min 140°C, Heizschrank |
| Beispiel 2 dieser Anmeldung = Bsp. 1 aus EPA 153579 | 5,3; Kohäsionsversagen | 5 min 120°C, Heizbacken (nach 2 min noch nicht abgebunden) + 30 min 140°C, Heizbacken |

Die Klebstoffmischung aus Beispiel 2, die nur 1 Triol (MG 450) enthält, verfestigt deutlich langsamer als die erfindungsgemäße Mischung aus Beispiel 1 und bewirkt auch nach längerer Heizbacken-Einwirkungsdauer keine befriedigende Zugscherfestigkeit.

**Patentansprüche**

1. Polyurethanreaktivmassen mit verzögerter Reaktivität enthaltend
   A) wenigstens ein über 40°C schmelrendes, durch Polyaddukt-Umhüllung stabilisiertes Polyisocyanat aus der Reihe 1,5-Naphthalin-diisocyanat, dimeres 4,4'-Diisocyanatodiphenylmethan, dimeres 2,4-Diisocyanatotoluol, 3,3'-Diisocyanato-4,4'-dimethyl-N,N'-diphenylharnstoff und N,N'-Bis-[4-(4-oder 2-isocyanatophenylmethyl)-phenyl]-harnstoff
   B) ein Polyolgemisch erhältlich aus den Polyolen B1, B2 und B3, die jeweils wenigstens drei Hydroxylgruppen aufweisen, wobei
   B1 ein Molekulargewicht von 800 bis 6.000,
   B2 ein Molekulargewicht von 400 bis 799 und
   B3 ein Molekulargewicht von 92 bis 399 aufweist und
   C) ein Polyamin, wobei Komponente A zunächst in suspendierter Form in den Komponenten B und C vorliegt und Komponenten A), B), und C) in solchen Mengen vorliegen, daß nach dem Erhitzen der Mischungen eine Verfestigung dieser Mischungen eintritt.

2. Polyurethanreaktivmasse nach Anspruch 1, dadurch gekennzeichnet, daß das Polyolgemisch wenigstens zum Teil aus durch Umsetzung mit einem Isocyanat erhältlichen hydroxylgruppenhaltigen Prepolymeren besteht.

3. Polyurethanreaktivmasse nach Anspruch 1, dadurch gekennzeichnet, daß das Polyamin C aliphatisch ist und ein Molekulargewicht von 700 bis 4.500 aufweist.

4. Polyurethanreaktivmasse nach wenigstens einem der vorhergehenden Ansprüche, dadurch gekennzeichnet, daß das Polyisocyanat A durch Reaktion der an der Oberfläche der festen, dispersen Teilchen vorhandenen NCO-Gruppen mittels Polyamine desaktiviert ist.

7

**5.** Polyurethanreaktivmasse nach wenigstens einem der vorhergehenden Ansprüche, dadurch gekennzeichnet, daß das Polyol B3 Trimethylolpropan ist.

**6.** Polyurethanreaktivmasse nach wenigstens einem der vorhergehenden Ansprüche, dadurch gekennzeichnet, daß das Polyol B2 ein Molekulargewicht von 400 bis 500 aufweist und das Polyol B1 ein Molekulargewicht von 2.000 bis 6.000 aufweist.

**7.** Polyurethanreaktivmasse nach wenigstens einem der vorhergehenden Ansprüche, dadurch gekennzeichnet, daß die Polyole B1 bis B3 Triole sind.

**8.** Polyurethanreaktivmasse nach wenigstens einem der vorhergehenden Ansprüche, dadurch gekennzeichnet, daß pyrogene Kieselsäure enthalten ist.

**9.** Verwendung der Polyurethanreaktivmasse gemäß wenigstens einem der vorhergehenden Ansprüche für Klebstoff-Eintopf-Systeme.

## Claims

**1.** Reactive polyurethane mixtures of delayed reactivity containing

A) at least one polyisocyanate melting above 40°C and stabilized by coating with polyadduct, being selected from the group consisting of 1,5-naphthalene diisocyanate, dimeric 4,4'-diisocyanatodiphenyl methane, dimeric 2,4-diisocyanatotoluene, 3,3'-diisocyanato-4,4'-dimethyl-N,N'-diphenyl urea or N,N'-bis-[4-(4- or 2-isocyanatophenylmethyl)-phenyl]-urea,

B) a polyol mixture obtainable from polyols B1, B2 and B3, each of which contains at least three hydroxyl groups,

B1 having a molecular weight in the range from 800 to 6,000,
B2 having a molecular weight in the range from 400 to 799 and
B3 having a molecular weight in the range from 92 to 399, and

C) a polyamine,

component A being initially introduced in suspended form in components B and C and components A), B), and C) being present in such quantities that the mixtures solidify after heating.

**2.** Reactive polyurethane mixtures as claimed in claim 1, characterized in that the polyol mixture consists at least partly of hydroxyl-containing prepolymers obtainable by reaction with an isocyanate.

**3.** Reactive polyurethane mixtures as claimed in claim 1, characterized in that the polyamine C is aliphatic and has the molecular weight in the range from 700 to 4,500.

**4.** Reactive polyurethane mixtures as claimed in at least one of the preceding claims, characterized in that the polyisocyanate A is deactived by reaction of the NCO groups present at the surface of the solid disperse particles with polyamines.

**5.** Reactive polyurethane mixtures as claimed in at least one of the preceding claims, characterized in that the polyol B3 is trimethylol propane.

**6.** Reactive polyurethane mixtures as claimed in at least one of the preceding claims, characterized in that the polyol B2 has a molecular weight in the range from 400 to 500 and the polyol B1 has a molecular weight in the range from 2,000 to 6,000.

**7.** Reactive polyurethane mixtures as claimed in at least one of the preceding claims, characterized in that the polyols B1 to B3 are triols.

**8.** Reactive polyurethane mixtures as claimed in at least one of the preceding claims, characterized in that they contain fumed silica.

**9.** The use of the reactive polyurethane mixtures claimed in at least one of the preceding claims for one-pack adhesive systems.

**Revendications**

1. Masses réactives de polyuréthannes à réactivité retardée, contenant

   A) au moins un polyisocyanate fondant à plus de 40°C, stabilisé par un enrobage de polyadduct, choisi parmi le 1,5-naphtalène-diisocyanate, le 4,4'-diisocyanatodiphénylméthane dimère, le 2,4-diisocyanatotoluène dimère, la 3,3'-diisocyanato-4,4'-diméthyl-N,N'-diphénylurée et la N,N'-bis-[4-(4- ou 2-isocyanatophénylméthyl)-phényl]-urée,

   B) un mélange de polyols obtenu à partir des polyols B1, B2 et B3 contenant chacun au moins trois groupes hydroxy,

   le polyol B1 ayant un poids moléculaire de 800 à 6 000,

   le polyol B2 un poids moléculaire de 400 à 799 et

   le polyol B3 un poids moléculaire de 92 à 399, et

   C) une polyamine, le composant A étant d'abord mis en suspension dans les composants B et C, et les composants A, B et C étant présents en quantités telles qu'après chauffage des mélanges ceux-ci se solidifient.

2. Masse réactive de polyuréthanne selon la revendication 1, caractérisée en ce que le mélange de polyols consiste, en partie au moins, en prépolymères contenant des groupes hydroxy, obtenus par réaction avec un isocyanate.

3. Masse réactive de polyuréthanne selon la revendication 1, caractérisée en ce que la polyamine C est aliphatique et a un poids moléculaire de 700 à 4 500.

4. Masse réactive de polyuréthanne selon au moins une des revendications précédentes, caractérisée en ce que le polyisocyanate A est désactivé à l'aide de polyamines, par réaction des groupes NCO présents à la surface des particules solides en dispersion.

5. Masse réactive de polyuréthanne selon au moins une des revendications qui précèdent, caractérisée en ce que le polyol B3 est le triméthylolpropane.

6. Masse réactive de polyuréthanne selon au moins une des revendications qui précèdent, caractérisée en ce que le polyol B2 a un poids moléculaire de 400 à 500 et le polyol B1 un poids moléculaire de 2 000 à 6 000.

7. Masse réactive de polyuréthanne selon au moins une des revendications qui précèdent, caractérisée en ce que les polyols B1 à B3 sont des triols.

8. Masse réactive de polyuréthanne selon au moins une des revendications qui précèdent, caractérisée en ce qu'elle contient de la silice pyrogène.

9. Utilisation d'une masse réactive de polyuréthanne selon au moins une des revendications qui précèdent pour des systèmes adhésifs en un seul récipient.